# EUROPEAN PATENT SPECIFICATION

(11) **EP 4 573 531 B1**
(45) Date of publication and mention of the grant of the patent: **01.07.2026**
(21) Application number: 23751035.9
(22) Date of filing: 07.08.2023
(51) Int. Cl.: G07C 11/00, G06Q 10/0631, G06V 20/52, G06V 40/10, H04W 4/021, G08G 1/01, G06Q 30/0202, G06Q 30/0201, G06Q 10/06, G06Q 10/04, G06Q 10/0637, G06Q 10/067, G06Q 30/015, G06Q 30/06, G07C 9/00, H04W 4/38

(54) **SYSTEMS AND METHODS FOR PREDICTIVE QUEUE MANAGEMENT USING SENSORS EMBEDDED IN CONNECTED LIGHTING SYSTEMS**
SYSTEME UND VERFAHREN ZUR PRÄDIKTIVEN WARTESCHLANGENVERWALTUNG UNTER VERWENDUNG VON IN VERBUNDENEN BELEUCHTUNGSSYSTEMEN EINGEBETTETEN SENSOREN
SYSTÈMES ET PROCÉDÉS DE GESTION PRÉDICTIVE DE FILES D'ATTENTE À L'AIDE DE CAPTEURS INTÉGRÉS DANS DES SYSTÈMES D'ÉCLAIRAGE CONNECTÉS

(30) Priority: 15.08.2022 US 202263397979 P; 12.09.2022 EP 22195012
(43) Date of publication of application: 25.06.2025
(73) Proprietor: Signify Holding B.V., 5656 AE Eindhoven (NL)
(72) Inventor: ZANG, Yizhou, 5656 AE Eindhoven (NL); ZHAO, Meng, 5656 AE Eindhoven (NL); YU, Jin, 5656 AE Eindhoven (NL)
(74) Representative: Verweij, Petronella Daniëlle
(86) International application number: PCT/EP2023/071783
(87) International publication number: WO 2024/037908

(56) References cited:
- WO-A1-93/00641
- US-A1- 2010 036 706
- US-A1- 2011 273 312
- US-A1- 2013 096 977
- US-A1- 2014 257 889
- US-A1- 2015 356 514

## Description

### FIELD OF THE DISCLOSURE

The present disclosure is directed generally to systems and methods for predictive queue management (PQM) using sensors embedded in connected lighting systems.

### BACKGROUND

Recent research studies show that 89% of customers leave a shop as a result of a long queue. 65% of these customers admitted to visiting a rival store because of the long queue. The average waiting time after which customers abandon their basket is only 5.45 minutes. 16% of customers even refuse to wait more than 3 minutes. Thus, customer wait time is a critical factor that affects customer satisfaction and overall sales revenue and profit. Minimizing the customer waiting time is a key strategy to improve customer satisfaction in many industries such as retail, sports, healthcare, hotel, etc.

One way to minimize customer waiting time in a retail setting is to open all checkout lanes and tills during business hours. However, this approach would likely increase cashier idle time and the operational costs. Thus, the central concept in queue management is to dynamically adjust the number of open lanes so that the queues are always short while minimizing cashier idle time. This method requires a Retail Management System (RMS) being able to forecast the number of lanes needed in an upcoming time period (such as 20 or 30 minutes), which is called Predictive Queue Management (PQM). Current state-of-the-art PQM technology is based on people counting by recording the number of customers entering and leaving the space using cameras, and then using these counts to roughly estimate the incoming queue volume. However, because of installation costs, other expenses, and privacy considerations, people counting camera-based systems only cover a small part of the entire space (usually at the entrance and exit area). Therefore, conventional Retail Management Systems are not able to forecast the occupancy status of other areas out of sight from the entrance and exit areas, nor the dynamics of customer flow across the full space. As a result, traditional PQM systems and methods suffer in terms of prediction accuracy. WO93/00641A1 and US2011/273312Al disclose background art systems in the technical field.

Accordingly, there is a need in the art for improved PQM systems and methods that feature improved accuracy yet are not cost-prohibitive.

### SUMMARY OF THE DISCLOSURE

The present disclosure is directed to systems and methods for predictive queue management (PQM) using sensors embedded in connected lighting systems. A monitored area, such as a retail store, entertainment venue, sporting arena, hospital, etc., can have a connected lighting system with a variety of embedded sensors. Applicant has recognized and appreciated that data collected by these sensors can be processed to generate a queue volume prediction representing the total number of individuals which will queue up in a pre-defined time in the future (such as the next 20 to 30 minutes). This queue volume can then be used, along with additional inputs, to generate a recommendation for the monitored area. The recommendation can indicate a number of queues needed to handle the incoming queue volume. To reduce the cost and power required and improve data efficiency, the systems and methods described herein may also use deep learning to determine which potential sensor locations within a space are most critical or statistically significant in calculating the queue volume prediction while minimizing prediction performance loss. Accordingly, the disclosed systems and methods enable cost-effective and accurate PQM using embedded sensors without invasive monitoring systems involving cameras.

The connected lighting system includes a plurality of luminaires to provide lighting to a monitored area. The connected lighting system also includes a plurality of sensors which may be embedded within the luminaires. The sensors are positioned at sensor locations throughout the monitored area. The sensors are configured to capture sensor data representative of the individuals (such as customers or patrons) within the monitored area. In a preferred example, at least one of the plurality of sensors is a passive infrared (PIR) sensor configured to capture motion data, in particular the movement of individuals within the monitored area. In another example, at least one of the plurality of sensors is a single pixel thermopile (SPT) sensor configured to capture thermal data indicative of occupancy of individuals within the monitored area. In a further example, at least one of the plurality of sensors is a radio frequency (RF) sensor to detect RF radiation corresponding to occupancy within the monitored area. The various sensors will be positioned throughout the monitored area, both near a point of ingress/egress (such as a shop's entrance/exit doors) as well as at other points remote from the point of ingress/egress.

The sensor data is fed into a forecasting model to determine a queue volume prediction for the monitoring area. The forecasting model may be a machine learning model trained by correlating historical queuing data and historical sensor data for the monitored area. Historical queuing data may be collected in a number of ways, such as by manual people counting or by auxiliary people count devices (such as still or video cameras) installed at the checkout area. Thus, the historical queuing data serves as a ground truth for training the forecasting model. Historical sensor data may be stored onsite at the monitoring area or remotely, such as on a cloud Internet-of-Things (IoT) storage server. The determined queue volume prediction represents a total amount of individuals that will be checking out in a defined time window in the future, such as a time window covering 20 to 30 minutes in the future. This time window may be adjusted based on the level of granularity required.

The queue volume prediction is then provided, along with additional data, to a recommender to determine a recommendation of the number of queues needed to process the queue volume prediction during the defined time window. The recommender may be a machine learning model, such as a small neural network. The recommender may also consider data such as service time for an individual (i.e., how long it takes to process a transaction for a customer) and the maximum number of potentially open queues.

In further examples, the system includes a sensor selection model for identifying sensor locations within the monitored area that are the most relevant to determining the queue volume prediction. The sensor selection model may be trained based on third-party floor plans, third-party historical people count data corresponding to those third-party floor plans, and third-party context data corresponding to those third-party floor plans for example. The third-party context information may indicate the type of the third-party space and/or locations of one or more sections within the third-party floor plans. Using this information, the sensor selection model may determine the intrinsic correlations between the sensor locations and their statistical significance regarding queue volume prediction and output a minimum number of optimal locations needed for capturing sensor data. An end user can use the outputted minimum number of locations needed to provide accurate queue volume predictions as the number of sensors needed for installation in the space to be monitored. In this way, the end user can avoid installing sensors at every luminaire and instead only install sensors at the minimum number of optimal locations.

Even in examples where the monitored area includes sensors at a number of locations that is greater than the determined minimum number of optimal locations, the system can also use these optimal locations to create a set of optimized data, a subset of the sensor data captured by the sensors. This optimized data, rather than the entire set of sensor data, can then be used by the forecasting model to determine a queue volume prediction for the monitored area. Accordingly, the sensor selection model reduces the number of sensors needed to monitor the whole space while maintaining an acceptable level of prediction accuracy.

Generally, in one aspect, a system for predictive queue management of a monitored area is provided. The system includes a plurality of sensors. The plurality of sensors is installed within a connected lighting system. Further, the plurality of sensors is positioned at a plurality of optimal locations. The plurality of sensors is configured to capture optimized sensor data. The optimized sensor data corresponds to individuals in the monitored area. The plurality of optimal locations is generated from a sensor selection model. The plurality of optimal locations is generated based on selection training data and a plurality of potential sensor locations. According to an example, the plurality of sensors includes PIR sensors, SPT sensors, and/or RF sensors. According to an example, the plurality of sensors is arranged at a point of ingress/egress within the monitored area and at least one other point of the monitored area, wherein the at least one other point is remote from the point of ingress/egress.

The system further includes a processor. The processor is configured to generate a queue volume prediction based on the optimized sensor data and a forecasting model. According to an example, the queue volume prediction corresponds to a predetermined future time window. The queue volume prediction includes a number of individuals that will need a service in the monitored area in the predetermined future time window.

The processor is further configured to generate a recommendation. The recommendation is generated based on a plurality of recommender inputs. The plurality of recommender inputs comprises at least the queue volume prediction. The recommendation comprises a number of queues needed to process the queue volume prediction. According to an example, the plurality of recommender inputs further includes a maximum number of available queues in the monitored area and/or a service time needed for at least one individual of the individuals in the queue volume prediction in the monitored area.

According to an example, the processor is further configured to generate the forecasting model. The forecasting model is generated based on historical queuing data and historical sensor data. The historical queuing data and the historical sensor data correspond to the monitored area.

According to an example, the system may further include a user interface. The user interface may be configured to display the recommendation including the number of queues needed.

According to an example, the optimized sensor data from each of the plurality of sensors indicates the queue volume prediction with a statistical significance above a predetermined threshold. The sensor selection model may be generated based on the selection training data. The selection training data includes a plurality of third-party floor plans, third-party historical people count data, and third-party context data. The statistical significance of the optimized sensor data is based at least in part on monitored area context data. The monitored area context data may include a monitored area type, one or more sections within the monitored area, and section location data corresponding to the one or more sections.

Generally, in another aspect, a method for predictive queue management of a monitored area is provided. The method includes capturing, from a plurality of sensors installed in a connected lighting system and positioned at a plurality of optimal locations, optimized sensor data. The optimized sensor data corresponds to individuals in the monitored area. The plurality of optimal locations is generated from a sensor selection model based on selection training data and a plurality of potential sensor locations.

The method further includes generating, via a processor, a queue volume prediction based on the optimized sensor data and a forecasting model.

The method further includes generating, via the processor, a recommendation based on the queue volume prediction. The recommendation includes a number of queues needed to process the queue volume prediction. The optimized sensor data from each of the plurality of sensors indicates the queue volume prediction with a statistical significance above a predetermined threshold.

According to an example, the method further includes generating, via the processor, the forecasting model based on historical queuing data and historical sensor data. The historical queuing data and the historical sensor data correspond to the monitored area.

According to an example, the method further includes dynamically controlling, via the processor, one or more luminaires of the connected lighting system based on the recommendation.

According to an example, the sensor selection model is generated based on the selection training data. The selection training data includes a plurality of third-party floor plans, third-party historical people count data, or third-party context data.

According to an example, the at least one optimal location is based at least in part on monitored area context data. The monitored area context data includes a monitored area type, one or more sections within the monitored area, and section location data corresponding to the one or more sections.

In various implementations, a processor or controller can be associated with one or more storage media (generically referred to herein as "memory," e.g., volatile and non-volatile computer memory such as ROM, RAM, PROM, EPROM, and EEPROM, floppy disks, compact disks, optical disks, magnetic tape, Flash, OTP-ROM, SSD, HDD, etc.). In some implementations, the storage media can be encoded with one or more programs that, when executed on one or more processors and/or controllers, perform at least some of the functions discussed herein. Various storage media can be fixed within a processor or controller or can be transportable, such that the one or more programs stored thereon can be loaded into a processor or controller so as to implement various aspects as discussed herein. The terms "program" or "computer program" are used herein in a generic sense to refer to any type of computer code (e.g., software or microcode) that can be employed to program one or more processors or controllers.

It should be appreciated that all combinations of the foregoing concepts and additional concepts discussed in greater detail below (provided such concepts are not mutually inconsistent) are contemplated as being part of the disclosure. It should also be appreciated that terminology explicitly employed herein should be accorded a meaning most consistent with the particular concepts disclosed herein.

These and other aspects of the various embodiments will be apparent from and elucidated with reference to the embodiment(s) described hereinafter.

### BRIEF DESCRIPTION OF THE DRAWINGS

In the drawings, like reference characters generally refer to the same parts throughout the different views. Also, the drawings are not necessarily to scale, emphasis instead generally being placed upon illustrating the principles of the various embodiments.
FIGS. 1A and 1B illustrate static queue management schemes.
FIG. 1C illustrates a dynamic queue management scheme, according to aspects of the present disclosure.
FIGS. 2A and 2B illustrate cameras monitoring ingress/egress points for queue management schemes, according to aspects of the present disclosure.
FIG. 3 is a schematic diagram of a connected lighting system configured for predictive queue management schemes, according to aspects of the present disclosure.
FIG. 4 is a floor plan of a monitored area displaying potential sensor locations, according to aspects of the present disclosure.
FIG. 5 is a floor plan of the monitored area displaying occupancy statuses, according to aspects of the present disclosure.
FIG. 6 is flow diagram of a system for a predictive queue management scheme of a monitored area, according to aspects of the present disclosure.
FIG. 7 is a graphical representation of actual queue volume over time, according to aspects of the present disclosure.
FIG. 8 is a graphical representation of a queue volume prediction over time, according to aspects of the present disclosure.
FIG. 9 is a flow diagram for generating sensor selection optimization, according to aspects of the present disclosure.
FIG. 10 is a floor plan of a monitored area displaying optimal sensor locations, according to aspects of the present disclosure.
FIG. 11 is a schematic illustration of a controller in a system for predictive queue management, according to aspects of the present disclosure.
FIG. 12 is a flowchart of a method for predictive queue management of a monitored area, according to aspects of the present disclosure.

### DETAILED DESCRIPTION OF EMBODIMENTS

The present disclosure is directed to systems and methods for predictive queue management (PQM) using sensors embedded or otherwise installed in connected lighting systems. A monitored area, such as a retail store, entertainment venue, sporting arena, hospital, etc. can have a connected lighting system with a variety of sensors that are embedded or otherwise coupled to the system. Applicant has recognized and appreciated that the data collected by these sensors can be processed to generate a queue volume prediction representing the total number of individuals which will queue up in a pre-defined time in the future (such as the next 20 to 30 minutes). This queue volume can then be used, along with additional inputs to generate a recommendation for the monitored area. The recommendation can indicate a number of queues needed to handle the incoming queue volume. To reduce the cost and power required and to improve data efficiency, the systems and methods may also use deep learning to determine which sensor locations within the monitored area are most significant to calculating the queue volume prediction while minimizing prediction performance loss. Accordingly, the disclosed systems and methods enable improved PQM using embedded sensors without invasive monitoring systems involving cameras.

The present disclosure describes various embodiments of systems and methods for providing a distributed network of sensors by making use of illumination devices that may already be arranged in a multi-grid and connected architecture (e.g., a connected lighting infrastructure). Such existing infrastructures can be used as a backbone for the additional detection and notification functionalities described herein. Signify's SlimBlend^{®} suspended luminaire is one example of a suitable illumination device or luminaire equipped with integrated IoT sensors such as microphones, cameras, and passive infrared sensors, single pixel thermopile sensors, and radio frequency sensors as described herein.

In embodiments, the illumination devices include USB type connector slots for the receivers and sensors etc. Illumination devices including sensor ready interfaces are particularly well suited and already provide powering, digital addressable lighting interface (DALI) connectivity to the luminaire's functionality and a standardized slot geometry. It should be appreciated that any illumination devices that are connected or connectable and sensor enabled including ceiling recessed or surface mounted luminaires, suspended luminaires, wall mounted luminaires, and free floor standing luminaires, etc. are contemplated. Suspended luminaires or free floor standing luminaires including thermopile infrared sensors may be advantageous because the sensors are arranged closer to occupants in the space and can detect higher temperatures of people. Additionally, the resolution of the thermopile sensor can be lower than for thermopile sensors mounted within a ceiling recessed or surface mounted luminaire mounted at approximately 3m ceiling height.

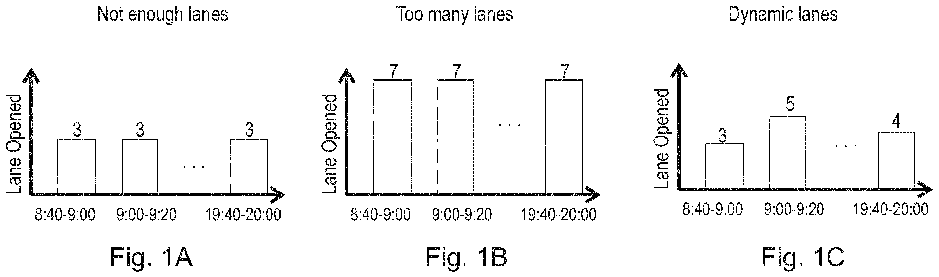

FIGS. 1A-1C illustrate static and dynamic queue management schemes over a period of time. In FIG. 1A, a static scheme of three queues (or checkout lanes) is used. However, this may lead to situations in which the number of individuals far exceeds the number of available queues, resulting in increased wait times and customer dissatisfaction. In FIG. 1B, another static scheme is used, this time increasing the number of queues to seven. While the increased number of lanes may reduce wait times, it may also lead to increased cashier idleness outside of peak hours. The scheme of FIG. 1C addresses the concerns of FIGS. 1A and 1B by instituting a dynamic queuing system. In the system of FIG. 1C, the number of available queues is adjusted based on a predicted queue volume. From 8:40 to 9:00, three queues are available. Due to an increase in predicted queue volume, the number of available queues increases to five from 9:00 to 9:20. The number of available queues will continue to fluctuate over time to adjust for update predicted queue volumes. For instance, from 19:40 to 20:00, four queues are made available. While the examples of FIGS. 1A-1C illustrate a PQM system which updates every 20 minutes, this period of time may be increased or decreased due to a variety of factors, including processing capacity and precision requirements.

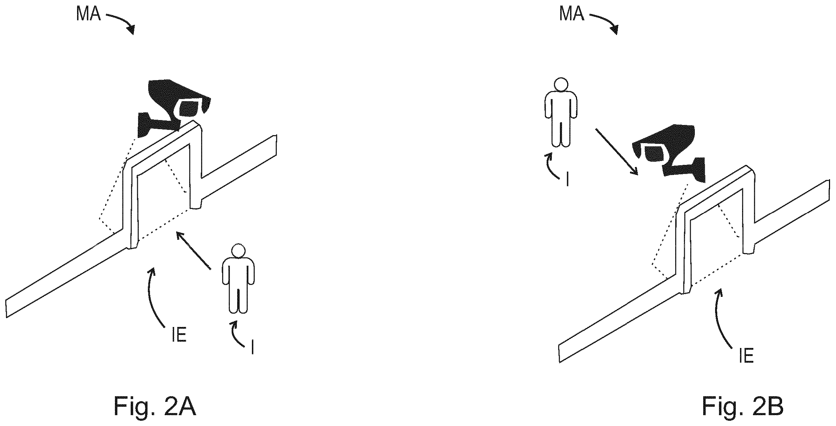

FIGS. 2A and 2B illustrate a people-counting approach using cameras to monitor ingress/egress points IE of a monitored area MA. In FIG. 2A, the camera records an individual I enter the monitored area MA via ingress/egress point IE. The camera relays this information to a processor, which increases the count of individuals within the monitored area MA by one. Similarly, in FIG. 2B, the camera records the individuals I exiting the monitored area MA via ingress/egress point IE. The camera again relays this information to a processor, which decreases the count of individuals within the monitored area MA by one. However, due to costs and privacy restrictions, these cameras can only cover a small part (here, the ingress/egress point IE) of the monitored area MA. Thus, the information relayed to the processor is limited by the field of view of each of the cameras. Therefore, systems and methods using this approach are unable to forecast or predict the occupancy status of other areas of the monitored area MA beyond the field of view of each of the cameras, nor can they account for dynamics of customer flow throughout the monitored area MA, resulting in reduced prediction accuracy. The dynamics of customer flow across the entire monitored area can be referred to as "global dynamics."

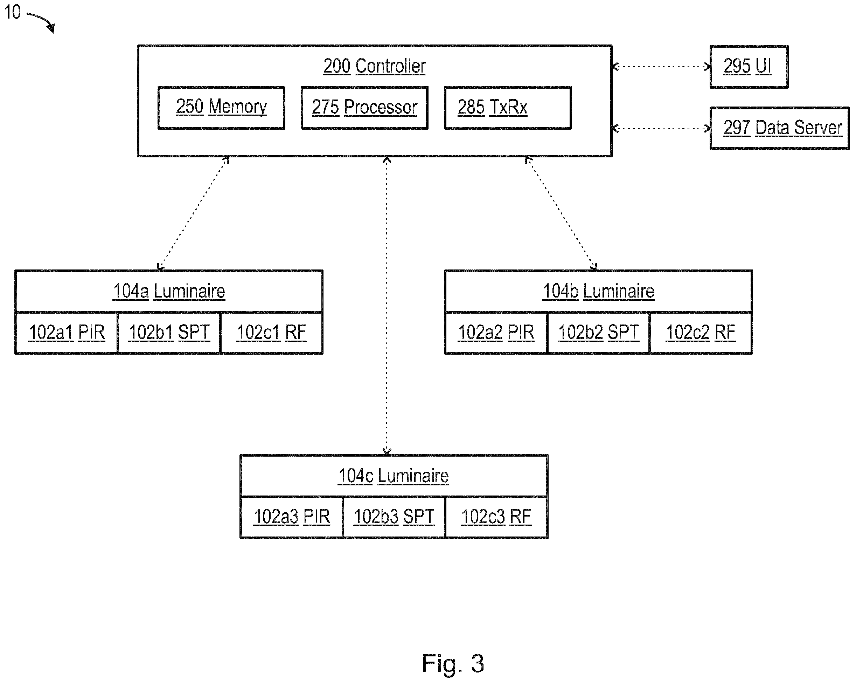

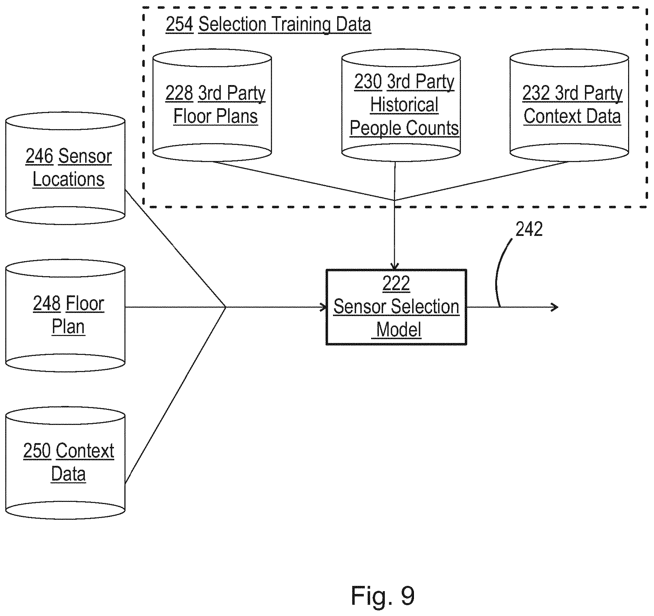

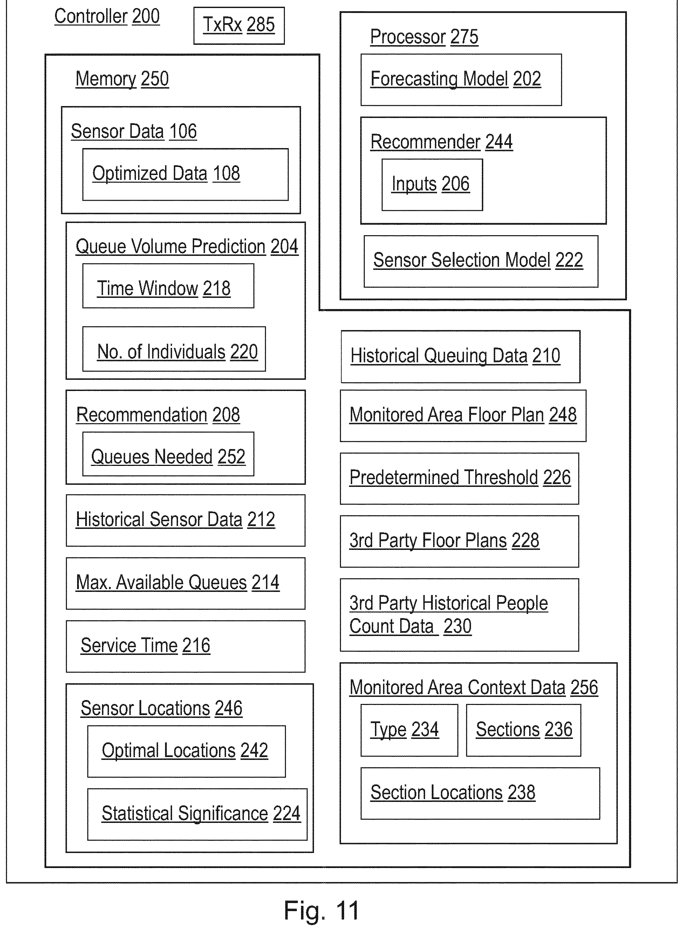

FIG. 3 is a schematic diagram of a system 10 configured for PQM. Broadly, the system 10 includes controller 200 and a plurality of sensors 102. As shown in FIG. 3, the system 10 may be integrated into a connected lighting system 100, such that the sensors 102 are embedded into luminaires 104 positioned around the monitored area MA. For example, each luminaire 104a, 104b, 104c in FIG. 3 includes a PIR sensor 102a1, 102a2, 102a3, an SPT sensor 102b1, 102b2, 102b3, and an RF sensor 102c1, 102c2, 102c3. The PIR sensors 102a are configured to detect motion, in particular the movement of individuals I within the monitored area MA. The SPT sensors 102b are configured to capture thermal data indicative of occupancy of individuals I within the monitored area MA. The RF sensors 102c are configured to detect RF radiation corresponding to occupancy within the monitored area MA. For example, the RF sensors 102c may detect disruptions or interference of Zigbee signals due to the presence individuals I within the monitored area; more interference may correlate to higher numbers of individuals I. Any combination of the aforementioned sensors (or other sensors useful in determining occupancy) may be used. Further, luminaires 104 within a monitored area MA may include several different combinations of types of sensors 102. While the schematic of FIG. 3 depicts three luminaires, the connected lighting system 100 may include any practical number of luminaires 104 to illuminate the monitored area MA. Further, in some examples, one or more of the plurality of sensors 102 may be arranged separately from the luminaires 104. For example, a discrete PIR sensor 102a could be positioned on a wall within the monitored area MA. Each of the plurality of sensors 102 is assigned a sensor location 246 based on its position within the monitored area. As will be described in greater detail with respect to FIG. 9, the system 10 may be configured to determine an optimal locations subset 242 of the sensor locations 246 based on which sensors 102 collect sensor data 106 most indicative of a queue volume prediction 204 (see FIG. 11).

Each lighting device or luminaire includes one or more light sources which can include light emitting diodes (LEDs) that are disposed on a printed circuit board. The LEDs can be configured to be driven to emit light of a particular character (i.e., color intensity and color temperature) by one or more light source drivers. The LEDs may be active (i.e., turned on); inactive (i.e., turned off); or dimmed by a factor d, where 0 ≤ d ≤ 1. The value d = 0 means that the LED is turned off whereas d = 1 represents an LED that is at its maximum illumination.

Single pixel thermopile (SPT) sensors convert thermal energy into electrical energy. The conversion of thermal energy into electrical energy by the single-pixel thermopile SPT generates a SPT sensor signal, which can also be referred to as a temperature signal, a heat signal, or an enthalpy signal. The temperature signal can also be considered an object infrared (IR) measurement signal. The single-pixel thermopile SPT generates a single temperature value due to the single-pixel resolution. An example signal can drastically change over time when one or more individuals enter or exit the field-of-view. Thus, when a temperature signal is measured over a period of time, the temperature signal includes a transient temperature response (or a heat response) of the complete area within its field of view.

The sensor data 106 (see FIG. 11) collected by the sensors 102 is provided to a controller 200 via wired or wireless connection. The controller 200 may include a memory 250, a processor 275, a transceiver 285, and/or other components as required by the application. In some examples, the controller 200 is positioned locally relative to the luminaires 104, such as within or proximate to the monitored area MA. For example, if the monitored area MA is a floor of a retail shop, the controller 200 may be positioned within the publicly accessible portion of the retail floor. In this case, the sensors 102 may be electrically coupled to the controller by a hardwired connection or a wireless connection using Wi-Fi, Bluetooth, Zigbee, ultra-wideband (UWB) or other protocols. In other examples, the controller 200 may be positioned remotely, such in an adjacent employees-only area, such as a back office, or even in a different building. In those cases, the sensors 102 are connected to the controller 200 via wireless connection. The aforementioned wireless connections may be facilitated by the transceiver 285.

Further, in some examples, the system 10 includes a user interface 295. The user interface 295 includes a display to convey information to a user, such as a recommendation 208 (see FIG. 11) regarding the number of queues needed 252 based on the number of individuals I within the monitored area MA. In some examples, the user interface 295 may also include a user input, such as a touchscreen or keypad. The user input may be used to collect information used by the processor 275 to determine the recommendation 208, such as a maximum number of available queues 214 in the monitored area MA or a service time 216 needed for one or more individuals I to queue in the monitored area MA (see FIG. 11). The service time 216 may be a single value (such as five minutes) representing the time needed for an average individual I to complete a transaction, or it may be a range (such as thirty seconds to ten minutes). For example, a user may enter that a maximum of five queues are available within the monitored MA, and that the average individual I requires two minutes to complete a transaction. In some examples, the user interface 295 may be embedded within the controller 200. In other examples, the user interface 295 may be physically apart from the controller 200, communicating with the controller 200 via wired or wireless connection.

In some examples, the system 10 also includes a data server 297. The data server 297 may be configured to receive and/or store information used by the controller 200 to generate recommendations 208, such as sensor locations 246, a monitored area floor plan 248, and/or monitored area context data 256 (see FIG. 11). The data server 297 may also store information used to train the machine learning aspects of the system 10, such as historical queuing data 210, historical sensor data 212, third-party floor plans 228, third-party historical people count data 230, and/or third-party context data (see FIG. 11). In some examples, the data server 297 may be embedded within the controller 200. In other examples, the data server 297 may be physically apart from the controller 200, communicating with the controller 200 via wired or wireless connection.

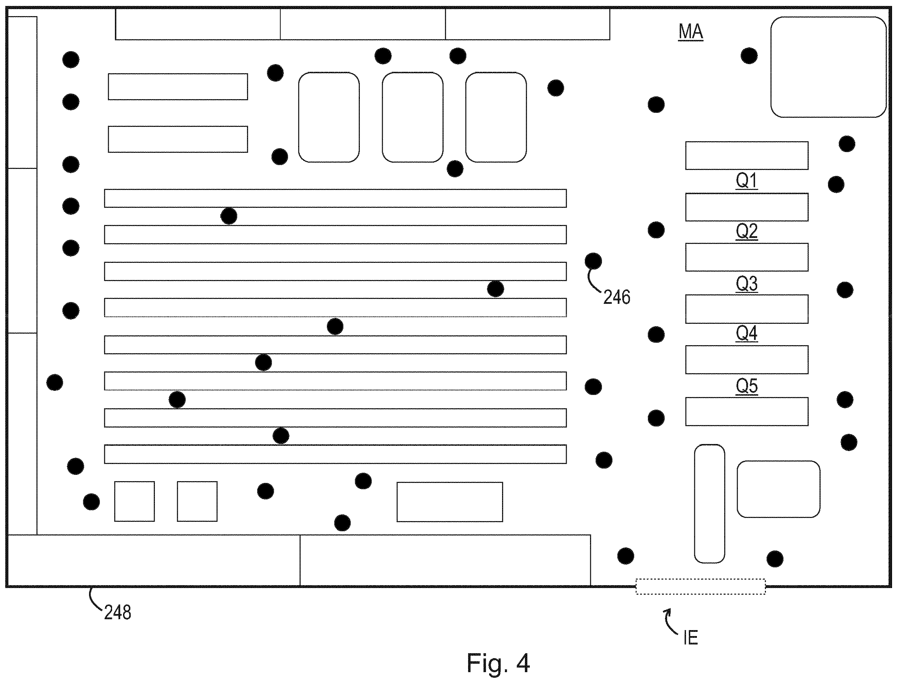

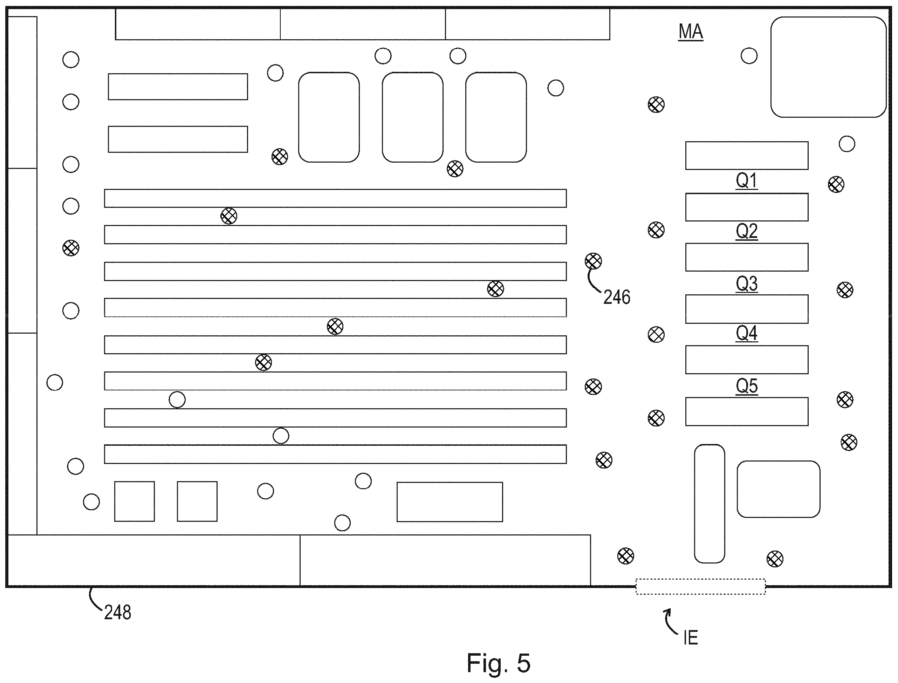

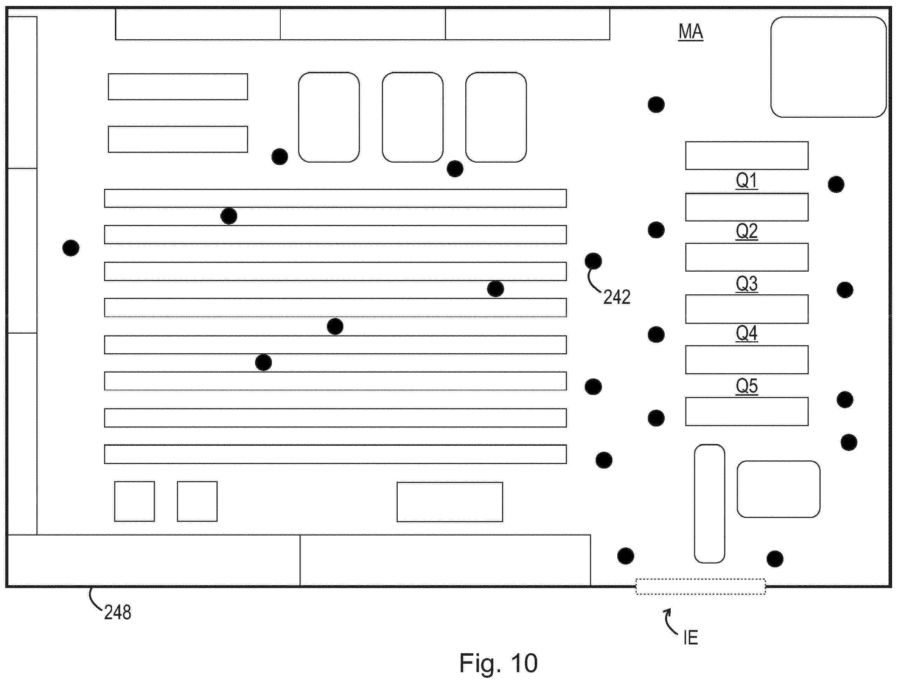

FIG. 4 is an example of a simplified floor plan 248 for a monitored area MA. In this example, the monitored area MA is a retail store, such as a grocery store or pharmacy. Customers enter the retail store via ingress/egress point IE. The floor plan 248 includes five queues Q1-Q5. Accordingly, the disclosed system 10 may be configured to determine how many of the queues Q1-Q5 to staff. This determination is made based on sensor data 106 collected by sensors 102 arranged throughout the monitored area MA at sensor locations 246. The total number of sensors 102 and arrangement of sensor locations 246 in the monitored area MA may depend on a variety of factors. Further, as shown with reference in FIGS. 9 and 10, the sensor locations 246 may be considered "potential" sensor locations 246 for sensors 102 to be placed. The system 10 may then generate a series of optimal sensor locations 242 (see FIG. 10) for generating an accurate queue volume prediction 204 with minimal sensor usage. Further, FIG. 5 illustrates which of the sensor locations 246 detect occupancy at a certain moment in time. An empty circle indicates no occupancy detected within the field of view of the sensor 102 at the sensor location 246, while a hashed circle indicates occupancy detected within the field of view of the sensor 102 at the sensor location 246.

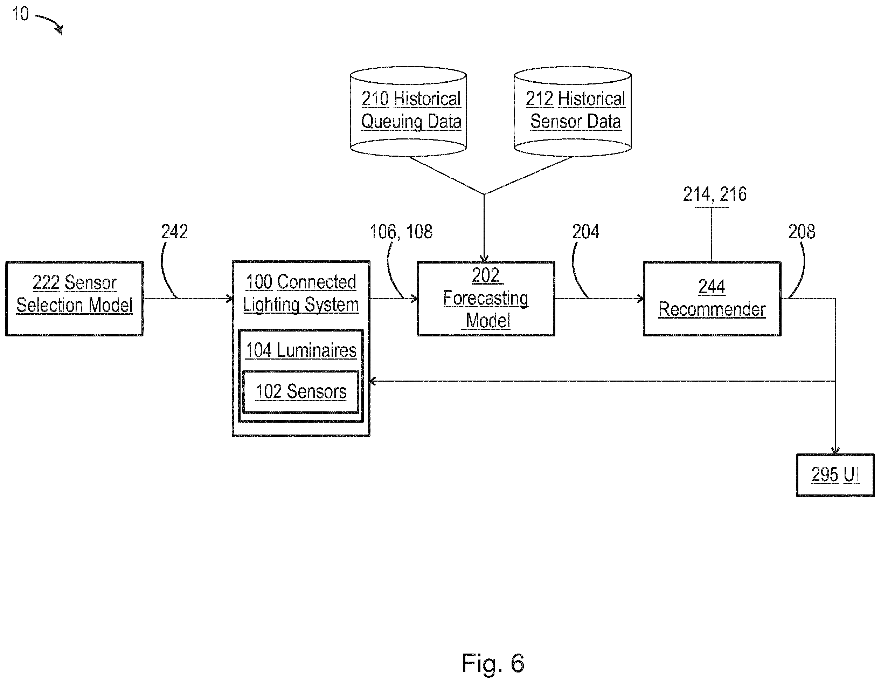

FIG. 6 is flow diagram depicting a system 10 for predictive queue management of a monitored area MA. Broadly, the system 10 includes a forecasting model 202, a recommender 244, a sensor selection model 222, a plurality of sensors 102 embedded or otherwise connected in a connected lighting system 100. As described above, the plurality of sensors 102 are embedded or otherwise connected within luminaires 104 arranged throughout the monitored area MA. The plurality of sensors 102 may include any combination of PIR sensors 102a, SPT sensors 102b, and/or RF sensors 102c or other occupancy detection sensors. Further, as shown in FIG. 6, the forecasting model 202, the recommender 244, and the sensor selection model 222 may be executed by a processor 275 of a controller 200.

The forecasting model 202 is configured to determine a queue volume prediction 204 for the monitored area MA. The queue volume prediction 204 indicates the number of individuals I which will be checking out or otherwise entering a queue in a predefined future time window 218 (see FIG. 11), such as twenty or thirty minutes. In some examples, the forecasting model 202 is a deep-learning model trained by two types of data: historical queuing data 210 and historical sensor data 212. The historical queuing data 210 is a set of actual, ground truth data of a number of individuals who enter a checkout queue in the monitored area MA during a time period. The historical queuing data 210 may be collected in a number of ways. In one example, the historical queuing data 210 may be collected through manual people counting, such as by an employee observing the monitored area MA and manually tracking the number of individuals queuing during the designated time period. Alternatively, auxiliary people counting devices, such as cameras may be installed in the checkout area to track queuing. In one example, these cameras may be PointGrab cameras. The auxiliary people counting devices could then generate a series of tuples, with each tuple containing a time stamp and a number of individuals queuing at that time stamp.

Similarly, the historical sensor data 212 includes data collected by the sensors 102 in the monitored area MA during a time period corresponding to the historical queuing data 210. This historical sensor data 212 may have been automatically collected and stored in an Internet of Things (IoT) platform cloud, and subsequently retrieved by the controller 200 to generate the forecasting model 202. In one example, the historical sensor data 212 is data collected by PIR sensors 102a, embodied as a list of tuples, with each tuple containing a binary value (1 for "occupied" status and 0 for "unoccupied status") and a corresponding time stamp. While the forecasting model 202 is preferably trained with historical queuing data 210 and historical sensor data 212 collected in the monitored area MA, in some examples, the historical queuing data 210 and historical sensor 212 may be collected from an area different than the monitored area MA, such as a different store with a similar layout.

Once trained, the forecasting model 202 determines the queue volume prediction 204 based on data provided by the sensors 102 positioned in the monitored area MA. In some examples, the queue volume prediction 204 is based on sensor data 106 collected by all of the sensors 102 in the monitored area MA. In one example, the sensors 102 may be PIR sensors 102a, and the sensor data 106 includes a time series of tuples, with each tuple containing a binary value (1 for "occupied" status and 0 for "unoccupied" status) and a corresponding time stamp. However, in many cases, only a subset of the sensor data 106 collected by all of the sensors 102 is required to calculate an accurate queue volume prediction 204. As will be described in greater detail with respect to FIG. 9, the sensor selection model 222 is configured to determine which potential sensor locations 246 are the most relevant to determining an accurate queue volume prediction 204 for the monitored area MA. The sensors 102 positioned at these optimal locations 242 provide optimized data 108, which is a subset of the sensor data 106 retrieved by all of the sensors 102, to the forecasting model 202. Only collecting and processing the optimized data 108 subset of the sensor data 106 reduces power consumption and processing time.

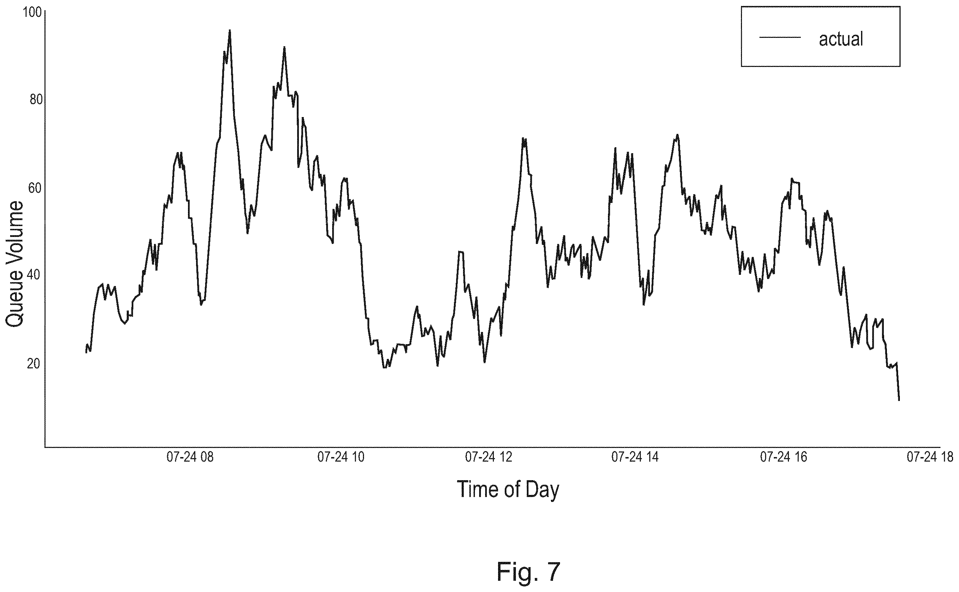

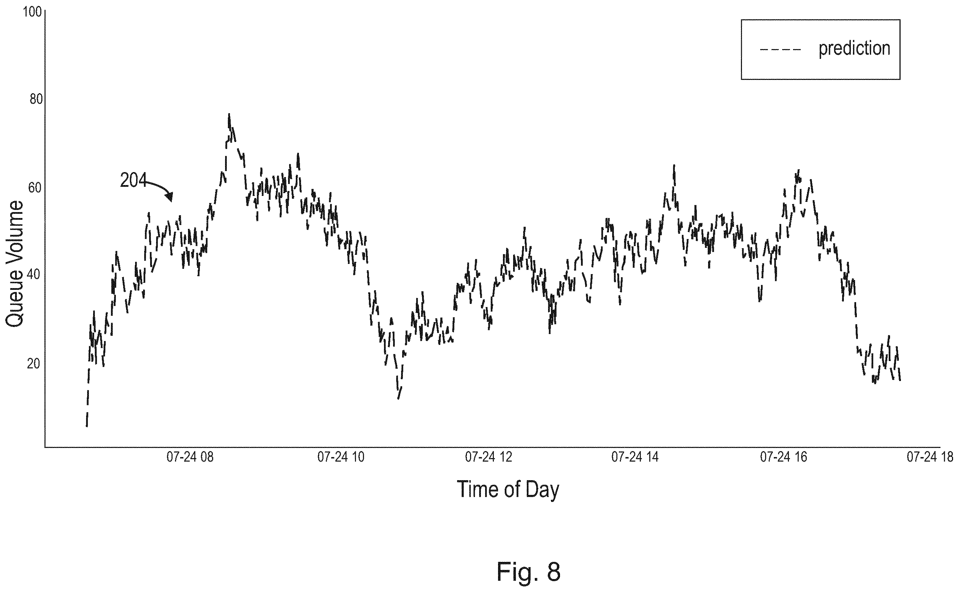

The queue volume prediction 204 indicates a number of individuals 220 who are predicted to be entering a checkout queue in a future time window 218. In one example, this time window is twenty or thirty minutes. The queue volume prediction 204 can be made at an arbitrary level of granularity; for example, the forecasting model 202 may generate a queue volume prediction 204 (with a future time window of 20 minutes) every minute. This forecasting model 202 has been shown to achieve 85 percent accuracy on queue volume prediction, which is 10 percent better than current PQMs. FIG. 7 shows an example of actual measured queue volume over time, while FIG. 8 illustrates the queue volume prediction 204. As can be seen from FIGS. 7 and 8, the queue volume prediction 204 corresponds to the actual measured queue volume at an acceptable degree of accuracy.

Once generated by the forecasting model 202, the queue volume prediction 204 is provided to the recommender 244. The recommender 244 is configured to determine a recommendation 208 regarding queue management. The recommendation 208 typically includes a number of queues needed 252 (such as three queues, ten queues, etc.) to handle the queue volume prediction 204.

This recommendation 204 is determined based on at least one of a plurality of inputs 206 (see FIG. 11), including the queue volume prediction 204. In one example, the recommender 244 is a machine learning model embodied as a tiny neural network. In this example, the inputs 206 to the recommender include the queue volume prediction 204, a number of maximum available queues 214, and an estimated service time 216 for one individual. The maximum available queues 214 serves as an upper limit to the recommender 244, and may correspond to the total number of checkout queues in a store and/or the total number of working employees capable of operating a checkout queue. For example, if a store has seven checkout lanes but only four employees trained to operate the checkout lanes, the maximum available queues 214 may be set to four. Further, the service time 216 may be set to an average amount of time to process one transaction, such as thirty seconds or five minutes. Example recommendations 208 are shown in FIG. 1C, with the recommendations changing from three queues to five queues to four queues. In some examples, the maximum available queues 214 and/or the service time 216 may be entered into a user interface 295 using a touchscreen or keypad.

Performance of the recommender 244 can be evaluated by using simulations to compare queue conditions before and after the recommendations are implemented in a monitored area MA. In an example simulation, queuing theory may be used to introduce randomized trials to make the simulations more robust. In this simulation, the monitored area is presumed to be a retail setting, the queue is a class M|M|c queue, service time 218 for an individual follows an exponential distribution (with a mean of two minutes), and customer arrival is a Poisson Process where parameter λ is deterministic. Such simulations have shown that implementing the recommendations 208 would reduce customer wait time by 70 percent and reduce staff idle time by 27%.

Once the recommendation 208 is generated by the recommender 244, the recommendation 208 may be implemented in a variety of ways. In one example, the user interface 295 may display the recommendation 208 so that a user (such as an employee) may implement the recommended number of queues 240 needed. The recommendation 208 may be displayed as a raw number of queues 240 or, in some cases, a command to open or close certain queues. In further examples, and as illustrated in FIG. 6 the recommendation 208 may be fed back to the connected lighting system to dynamically control aspects of the luminaires 104. For example, one or more luminaires 104 may change color, intensity, or strobe-rate based on the recommendation 208. In particular, a luminaire 104 positioned over or proximate to a queue that should open due to the recommendation 208 may brighten and/or emit green light, while a luminaire positioned over or proximate to a queue that should close due to the recommendation 208 may dim and/or emit red light. In further examples, the system 10 may activate or deactivate self-checkout terminals, such that the number of activate self-checkout terminals matches the recommendation 208 for number of queues needed.

FIG. 9 is a flow diagram for generating sensor selection optimization. Sensor selection model 222 is configured to determine the optimal locations 242 of sensors 102 most relevant to accurately determining a queue volume prediction 204. The optimal locations 242 can be determined based on selection training data 254 from third parties and location data for all the potential locations 246 for sensors 102 within the monitored area MA. Focusing on data collected by the sensors 102 at these optimal location 242, rather than all sensor locations 246, reduces processing time and power consumption. Reducing the amount of data used to determine the queue volume prediction 204 can lead to prediction performance loss into the system; higher prediction performance loss means lower prediction accuracy. Accordingly, the sensor selection model 222 aims to limit the total number of optimal locations 242 while also minimizing prediction performance loss. Retailers can also reduce costs by knowing the optimal locations 242 of sensors 102. For example, by knowing a minimum number of sensors needed at optimal locations 242 to determine a queue volume prediction 204 while minimizing prediction performance loss, a retailer can install a subset of sensors at the optimal locations 242 instead of a larger number of sensors at all locations 246.

In the example of FIG. 9, the sensor selection model 222 may be a deep learning model trained with selection training data 254 from three data sources: (1) a large number of third-party floor plans 228; (2) third-party historical people count data 230 for a few known indoor spaces; and (3) third-party context data 232 for the known indoor spaces. The third-party context data 232 may include information regarding the type of each space and the sections of each space. For instance, a space may have a type of "grocery store" and may be divided into several sections corresponding to different grocery store departments, such as deli, produce, and health and beauty. This training data teaches the sensor selection model 222 the intrinsic correlations between sensor locations 102 and their statistical significance 224 in determining the queue volume prediction 204.

Once trained, the sensor selection model 222 receives a variety of information to determine the optimized locations 242 of the sensors 246, namely, the monitored area MA floor plan 248, the sensor locations 242 of all of the sensors 102 within the monitored area MA, and monitored area context data 256. The monitored area context data 256 may include (1) a monitored area MA type 234 (such as retail store, entertainment venue, sporting arena, hospital, etc.), (2) one or more sections 236 within the monitored area MA, and (3) section location data 238 corresponding to the one or more sections 236. The trained sensor selection model 222 uses this information as input and generates a score for each sensor location 246 based on its deep learning algorithm. Each outputted score represents a statistical significance 224 (see FIG. 11) of the corresponding sensor location 246 in determining the queue volume prediction 204. The sensor locations 246 scoring above a predetermined threshold 226 (see FIG. 11) may then be designated as optimal locations 242 to accurately determine the queue volume prediction 204. In some examples, managers of the monitored area MA may elect to remove or deactivate sensors in non-optimal locations. Further, instances where sensors 102 have yet to be installed, the same managers may elect to only install sensors 102 in optimal sensor locations 242. FIG. 10 shown an example floor plan where a subset of the potential sensor locations 246 of FIG. 4 have been selected as optimal sensor locations 242.

The greatest benefit of the sensor selection model 222 is to not only reduce the number of sensors 102 needed for monitoring the whole monitored area MA, but also to maintain a level of prediction accuracy. In one example, one hundred and twenty (120) sensor locations 246 exist in a monitored area MA. When data from all 120 sensor locations 246 are used to calculate queue volume predictions 204, the calculations have a mean absolute percentage error (MAPE) of 0.165. By using the sensor selection model 222, the 120 sensor locations 246 may be reduced to only thirty (30) optimal locations. This reduction only increases the MAPE to 0.171, a negligible increase in light of the reduction processing and power consumption.

FIG. 11 is a schematic illustration of a controller 200 in a system for PQM. Broadly, the controller 200 includes a memory 250, a processor 275, and a transceiver 285. As shown in FIG. 3, the controller 200 is in wired and/or wireless communication with sensors 102, luminaires 104, a user interface 295, and a data server 297. This wired and/or wireless communication may be facilitated by the transceiver 285. The processor 275 is configured to execute (1) a forecasting model 202 to generate a queue volume prediction 204, (2) a recommender 244 to generate a recommendation 208, and a (3) sensor selection model 222 to determine optimal locations 242 for the sensors 102.

The memory 250 is configured to store a wide array of data received from a variety of sources, such as the sensors 102, the user interface 285, or the processor 275. The memory 250 may store sensor data 106 collected by the sensors 102, as well as optimized data 108 subset. The memory 250 may also store the queue volume prediction 204 generated by the forecasting model 202. The queue volume prediction 204 may be defined by a number of individuals 220 and a future time window 218. The memory 250 may also store historical queuing data 210 and historical sensor data 212 received from an external source, such as a user interface 295. The processor 275 may use the historical queuing data and the historical sensor data 212 to train the forecasting model 202.

The memory 250 may also store the recommendation 208 generated by the recommender 244. The recommendation 208 may be defined by a number of queues needed 252 to process the queue volume prediction 204. The memory 250 may also store a value of maximum available queues 214 and service time 216 for an individual received from the user interface 295 or the data server 297. In addition to the queue volume prediction, the recommender 244 may use the maximum available queues 214 and/or the services time 216 to generate the recommendation 208.

The memory 250 may also store sensor locations 246, along with a statistical significance 224 for each sensor location 246 as determined by the sensor selection model 222. The memory 250 may also store an optimal locations 242 subset of the sensor locations 242. The optimal locations 242 are determined based on their corresponding statistical significance 224 and a predetermined threshold 226, also stored in the memory. The memory 250 may also store third-party floor plans 228 and third-party historical people count data 230 used to train the sensor selection model 222. The memory may also store a monitored area floor plan 248 and monitored area context data 256. The monitored area context data 256 includes data regarding type 234, sections 236, and section locations 238. Once trained, the sensor selection model 222 uses the sensor locations 246, monitored area floor plan 248, and the monitored area context data 256 determine statistical significance 224 of each sensor location 224, and therefore a subset of optimal locations 242.

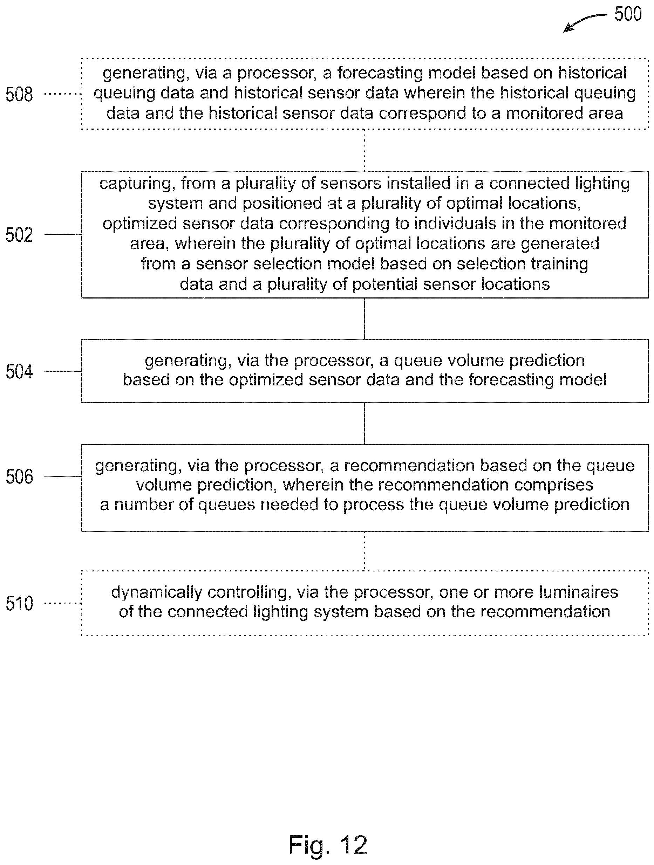

FIG. 12 is a flowchart of a method 500 for predictive queue management of a monitored area. The method 500 includes capturing 502, from a plurality of sensors installed in a connected lighting system and positioned at a plurality of optimal locations, optimized sensor data. The optimized sensor data corresponds to individuals in the monitored area. The plurality of optimal locations is generated from a sensor selection model based on selection training data and a plurality of potential sensor locations. The sensor selection model may be a deep learning model trained with selection training data from three data sources: (1) a large number of third-party floor plans; (2) third-party historical people count data for a few known indoor spaces; and (3) third-party context data for the known indoor spaces.

The method 500 further includes generating 504, via a processor, a queue volume prediction based on the optimized data and a forecasting model.

The method 500 further includes generating 506, via the processor, a recommendation. The recommendation includes a number of queues needed to process the queue volume prediction. The recommendation is based on a plurality of recommender inputs including at least the queue volume prediction. In some examples, the recommender inputs may also include a maximum number of available queues and a service time.

According to an example, the method 500 may further include the optional step of generating 508, via the processor, the forecasting model based on historical queuing data and historical sensor data. The historical queuing data and the historical sensor data correspond to the monitored area.

According to an example, the method 500 may further include the optional step of dynamically controlling 510, via the processor, one or more luminaires of the connected lighting system based on the recommendation. In some examples, a luminaire proximate to a checkout queue that should close due to the recommendation may dim or change color to red. If a luminaire is proximate to a checkout queue that should open due to the recommendation, it may brighten or change color to green. In example methods, in lieu of or in addition to step 510, check-out terminals or self-checkout terminals may be dynamically activated or deactivated based on the recommendation.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements can optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of."

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements can optionally be present other than the elements specifically identified within the list of elements to which the phrase "at least one" refers, whether related or unrelated to those elements specifically identified.

It should also be understood that, unless clearly indicated to the contrary, in any methods claimed herein that include more than one step or act, the order of the steps or acts of the method is not necessarily limited to the order in which the steps or acts of the method are recited.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively.

The above-described examples of the described subject matter can be implemented in any of numerous ways. For example, some aspects can be implemented using hardware, software, or a combination thereof. When any aspect is implemented at least in part in software, the software code can be executed on any suitable processor or collection of processors, whether provided in a single device or computer or distributed among multiple devices/computers.

The present disclosure can be implemented as a system, a method, and/or a computer program product at any possible technical detail level of integration. The computer program product can include a computer readable storage medium (or media) having computer readable program instructions thereon for causing a processor to carry out aspects of the present disclosure.

The computer readable storage medium can be a tangible device that can retain and store instructions for use by an instruction execution device. The computer readable storage medium can be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network can comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present disclosure can be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions can execute entirely on the user's computer, partly on the user's computer, as a stand-alone software package, partly on the user's computer and partly on a remote computer or entirely on the remote computer or server. In the latter scenario, the remote computer can be connected to the user's computer through any type of network, including a local area network (LAN) or a wide area network (WAN), or the connection can be made to an external computer (for example, through the Internet using an Internet Service Provider). In some examples, electronic circuitry including, for example, programmable logic circuitry, field-programmable gate arrays (FPGA), or programmable logic arrays (PLA) can execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to examples of the disclosure. It will be understood that each block of the flowchart illustrations and/or block diagrams, and combinations of blocks in the flowchart illustrations and/or block diagrams, can be implemented by computer readable program instructions.

The computer readable program instructions can be provided to a processor of a, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions can also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram or blocks.

The computer readable program instructions can also be loaded onto a computer, other programmable data processing apparatus, or other device to cause a series of operational steps to be performed on the computer, other programmable apparatus, or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various examples of the present disclosure. In this regard, each block in the flowchart or block diagrams can represent a module, segment, or portion of instructions, which comprises one or more executable instructions for implementing the specified logical function(s). In some alternative implementations, the functions noted in the blocks can occur out of the order noted in the Figures. For example, two blocks shown in succession can, in fact, be executed substantially concurrently, or the blocks can sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Other implementations are within the scope of the following claims.

While various examples have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the examples described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the teachings is/are used. Those skilled in the art will recognize or be able to ascertain using no more than routine experimentation, many equivalents to the specific examples described herein. Examples of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the scope of the present disclosure.

## Claims

1. A system (10) for predictive queue management of a monitored area (MA), comprising:
a plurality of sensors (102) installed within a connected lighting system (100) and positioned at a plurality of locations (242), the plurality of sensors (102) being configured to
provide optimized sensor data (108) corresponding to individuals (I) in the monitored area (MA), wherein the plurality of locations (242) is generated from a sensor selection model (222) based on selection training data (254) and a plurality of potential sensor locations (246); and wherein the selection training data (254) includes a plurality of third-party floor plans, third-party historical people count data, or third-party context data,
a processor (275) configured to:
generate, based on the optimized sensor data (108) and a forecasting model (202), a queue volume prediction (204); and
generate, based on a plurality of recommender inputs (206) comprising at least the queue volume prediction (204), a recommendation (208) comprising a number of queues needed (240) to process the queue volume prediction (204).

2. The system (10) of claim 1, wherein the plurality of sensors (102) comprises passive infrared (PIR) sensors (102a), single pixel thermopile (SPT) sensors (102b), and/or radio frequency (RF) sensors (102c).

3. The system (10) of claim 1, wherein the plurality of sensors (102) is arranged at a point of ingress/egress (IE) within the monitored area (MA) and at least one other point of the monitored area (MA), wherein the at least one other point is remote from the point of ingress/egress (IE).

4. The system (10) of claim 1, wherein the processor (275) is further configured to generate the forecasting model based on historical queuing data (210) and historical sensor data (212), and wherein the historical queuing data (210) and the historical sensor data (212) correspond to the monitored area (MA).

5. The system (10) of claim 1, wherein the plurality of recommender inputs (206) further comprises a maximum number of available queues (214) in the monitored area (MA) and/or a service time (216) needed for at least one individual of the individuals (I) in the queue volume prediction (204) in the monitored area (MA).

6. The system (10) of claim 1, wherein the queue volume prediction (204) corresponds to a predetermined future time window (218), and wherein the queue volume prediction comprises a number of individuals (220) that will need a service in the monitored area (MA) in the predetermined future time window (218).

7. The system (10) of claim 1, further comprising a user interface (295) configured to display the recommendation (206) comprising the number of queues needed (208).

8. The system (10) of claim 1, wherein the optimized sensor data (108) from each of the plurality of sensors (102) indicates the queue volume prediction (204) with a statistical significance (224) above a predetermined threshold (226).

9. The system (10) of claim 8, wherein the statistical significance (224) of at least one location (242) is based at least in part on monitored area context data (256), and the monitored area context data (256) comprises a monitored area type (234), one or more sections (236) within the monitored area (MA), and section location data (238) corresponding to the one or more sections (236).

10. A method (500) for predictive queue management of a monitored area, comprising:
providing (502), from a plurality of sensors installed in a connected lighting system and positioned at a plurality of locations, optimized sensor data corresponding to individuals in the monitored area, wherein the plurality of locations are generated from a sensor selection model (222)
based on selection training data and a plurality of potential sensor locations; and wherein the selection training data includes a plurality of third-party floor plans, third-party historical people count data, or third-party context data,
generating (504), via a processor, a queue volume prediction based on the optimized sensor data and a forecasting model; and
generating (506), via the processor, a recommendation based on the queue volume prediction, wherein the recommendation comprises a number of queues needed to process the queue volume prediction;
wherein the optimized sensor data from each of the plurality of sensors indicates the queue volume prediction with a statistical significance above a predetermined threshold.

11. The method (500) of claim 10, further comprising generating (508), via the processor, the forecasting model based on historical queuing data and historical sensor data, wherein the historical queuing data and the historical sensor data correspond to the monitored area.

12. The method (500) of claim 10, further comprising dynamically controlling (510), via the processor, one or more luminaires of the connected lighting system based on the recommendation.

13. The method (500) of claim 10, wherein the sensor selection model is generated based on the selection training data, and wherein the selection training data includes a plurality of third-party floor plans, third-party historical people count data, or third-party context data.

14. The method (500) of claim 10, wherein at least one location is based at least in part on monitored area context data, and the monitored area context data comprises a monitored area type, one or more sections within the monitored area (MA), and section location data corresponding to the one or more sections.

## Patentansprüche

1. System (10) für eine prädiktive Warteschlangenverwaltung eines überwachten Bereichs (MA), umfassend:
eine Vielzahl von Sensoren (102), die innerhalb eines verbundenen Beleuchtungssystems (100) installiert und an einer Vielzahl von Positionen (242) eingerichtet sind, wobei die Vielzahl von Sensoren (102) konfiguriert ist, um optimierte Sensordaten (108) entsprechend Individuen (I) in dem überwachten Bereich (MA) bereitzustellen, wobei die Vielzahl von Positionen (242) aus einem Sensorauswahlmodell (222) basierend auf Auswahltrainingsdaten (254) und einer Vielzahl von potentiellen Sensorpositionen (246) erzeugt wird; und wobei die Auswahltrainingsdaten (254) eine Vielzahl von Grundrissen Dritter, historische Personenzähldaten Dritter oder Kontextdaten Dritter einschließen,
einen Prozessor (275), der konfiguriert ist zum:
Erzeugen, basierend auf den optimierten Sensordaten (108) und einem Prognosemodell (202), einer Warteschlangenvolumenvorhersage (204); und
Erzeugen, basierend auf einer Vielzahl von Empfehlungsgebereingaben (206), umfassend mindestens die Warteschlangenvolumenvorhersage (204), eine Empfehlung (208), umfassend eine Anzahl von benötigten Warteschlangen (240), um die Warteschlangenvolumenvorhersage (204) zu verarbeiten.

2. System (10) nach Anspruch 1, wobei die Vielzahl von Sensoren (102) passive Infrarot-Sensoren (PIR-Sensoren) (102a), Einzelpixel-Thermosäulen-Sensoren (SPT-Sensoren) (102b) und/oder Hochfrequenz-Sensoren (HF-Sensoren) (102c) umfasst.

3. System (10) nach Anspruch 1, wobei die Vielzahl von Sensoren (102) an einem Eingangs-/Ausgangspunkt (IE) innerhalb des überwachten Bereichs (MA) und an mindestens einem anderen Punkt des überwachten Bereichs (MA) angeordnet ist, wobei der mindestens eine andere Punkt von dem Eingangs-/Ausgangspunkt (IE) entfernt ist.

4. System (10) nach Anspruch 1, wobei der Prozessor (275) ferner konfiguriert ist, um das Vorhersagemodell basierend auf historischen Warteschlangendaten (210) und historischen Sensordaten (212) zu erzeugen, und wobei die historischen Warteschlangendaten (210) und die historischen Sensordaten (212) dem überwachten Bereich (MA) entsprechen.

5. System (10) nach Anspruch 1, wobei die Vielzahl von Empfehlungsgebereingaben (206) ferner eine maximale Anzahl verfügbarer Warteschlangen (214) in dem überwachten Bereich (MA) und/oder eine Servicezeit (216) umfasst, die für mindestens ein Individuum der Individuen (I) in der Warteschlangenvolumenvorhersage (204) in dem überwachten Bereich (MA) benötigt wird.

6. System (10) nach Anspruch 1, wobei die Warteschlangenvolumenvorhersage (204) einem vorbestimmten zukünftigen Zeitfenster (218) entspricht, und wobei die Warteschlangenvolumenvorhersage eine Anzahl von Individuen (220) umfasst, die eine Dienstleistung in dem überwachten Bereich (MA) in dem vorbestimmten zukünftigen Zeitfenster (218) benötigen werden.

7. System (10) nach Anspruch 1, ferner umfassend eine Bedienerschnittstelle (295), die konfiguriert ist, die Empfehlung (206) anzuzeigen, umfassend die Anzahl der benötigten Warteschlangen (208).

8. System (10) nach Anspruch 1, wobei die optimierten Sensordaten (108) von jedem der Vielzahl von Sensoren (102) die Warteschlangenvolumenvorhersage (204) mit einer statistischen Signifikanz (224) oberhalb eines vorbestimmten Schwellenwerts (226) angeben.

9. System (10) nach Anspruch 8, wobei die statistische Signifikanz (224) von mindestens einer Position (242) mindestens teilweise auf überwachten Bereichskontextdaten (256) basiert, und die überwachten Bereichskontextdaten (256) einen überwachten Bereichstyp (234), einen oder mehrere Abschnitte (236) innerhalb des überwachten Bereichs (MA) und Abschnittspositionsdaten (238) entsprechend dem einen oder den mehreren Abschnitten (236) umfassen.

10. Verfahren (500) für die prädiktive Warteschlangenverwaltung eines überwachten Bereichs, umfassend:
Bereitstellen (502), aus einer Vielzahl von Sensoren, die in einem verbundenen Beleuchtungssystem installiert und an einer Vielzahl von Positionen eingerichtet sind, von optimierten Sensordaten, die Individuen in dem überwachten Bereich entsprechen, wobei die Vielzahl von Positionen aus einem Sensorauswahlmodell (222) basierend auf Auswahltrainingsdaten und einer Vielzahl von potentiellen Sensorpositionen erzeugt werden; und wobei die Auswahltrainingsdaten eine Vielzahl von Grundrissen Dritter, historische Personenzähldaten Dritter oder Kontextdaten Dritter umfassen,
Erzeugen (504), über einen Prozessor, einer Warteschlangenvolumenvorhersage basierend auf den optimierten Sensordaten und einem Vorhersagemodell; und
Erzeugen (506), über den Prozessor, einer Empfehlung basierend auf der Warteschlangenvolumenvorhersage, wobei die Empfehlung eine Anzahl von Warteschlangen umfasst, die benötigt werden, um die Warteschlangenvolumenvorhersage zu verarbeiten;
wobei die optimierten Sensordaten von jedem der Vielzahl von Sensoren die Warteschlangenvolumenvorhersage mit einer statistischen Signifikanz oberhalb eines vorbestimmten Schwellenwerts angeben.

11. Verfahren (500) nach Anspruch 10, ferner umfassend das Erzeugen (508), über den Prozessor, des Prognosemodells basierend auf historischen Warteschlangendaten und historischen Sensordaten, wobei die historischen Warteschlangendaten und die historischen Sensordaten dem überwachten Bereich entsprechen.

12. Verfahren (500) nach Anspruch 10, ferner umfassend das dynamische Steuern (510), über den Prozessor, einer oder mehrerer Leuchten des verbundenen Beleuchtungssystems basierend auf der Empfehlung.

13. Verfahren (500) nach Anspruch 10, wobei das Sensorauswahlmodell basierend auf den Auswahltrainingsdaten erzeugt wird, und wobei die Auswahltrainingsdaten eine Vielzahl von Grundrissen Dritter, historische Personenzähldaten Dritter oder Kontextdaten Dritter einschließen.

14. Verfahren (500) nach Anspruch 10, wobei mindestens eine Position mindestens teilweise auf überwachten Bereichskontextdaten basiert, und die überwachten Bereichskontextdaten einen überwachten Bereichstyp, einen oder mehrere Abschnitte innerhalb des überwachten Bereichs (MA) und Abschnittspositionsdaten entsprechend dem einen oder den mehreren Abschnitten umfassen.

## Revendications

1. Système (10) destiné à la gestion prévisionnelle de file d'attente d'une zone surveillée (MA), comprenant :
une pluralité de capteurs (102) installés au sein d'un système d'éclairage connecté (100) et positionnés au niveau d'une pluralité de localisations (242), la pluralité de capteurs (102) étant configurés pour fournir des données de capteur optimisées (108) correspondant aux personnes (I) dans la zone surveillée (MA), dans lequel la pluralité de localisations (242) est générée en provenance d'un modèle de sélection de capteur (222) en fonction de données d'entraînement de sélection (254) et d'une pluralité de localisations potentielles de capteur (246) ; et dans lequel les données d'entraînement de sélection (254) comportent une pluralité de plans d'étage tiers, des données historiques de comptage de gens tierces, ou des données de contexte tierces,
un processeur (275) configuré pour :
générer, en fonction des données de capteur optimisées (108) et d'un modèle prospectif (202), d'une prévision de volume de file d'attente (204) ; et
générer, en fonction d'une pluralité d'entrées de recommandeur (206) comprenant au moins la prévision de volume de file d'attente (204), une recommandation (208) comprenant un nombre de files d'attente nécessaires (240) pour traiter la prévision de volume de file d'attente (204).

2. Système (10) selon la revendication 1, dans lequel la pluralité de capteurs (102) comprend des capteurs à infrarouge passifs (PIR) (102a), des capteurs thermopiles à pixel unique (SPT) (102b), et/ou des capteurs à radiofréquence (RF) (102c).

3. Système (10) selon la revendication 1, dans lequel la pluralité de capteurs (102) est agencée au niveau d'un point d'entrée/sortie (IE) au sein de la zone surveillée (MA) et d'au moins un autre point de la zone surveillée (MA), dans lequel l'au moins un autre point est distant du point d'entrée/sortie (IE).

4. Système (10) selon la revendication 1, dans lequel le processeur (275) est configuré en outre pour générer le modèle prospectif en fonction de données historiques de mise en file d'attente (210) et de données historiques de capteur (212), et dans lequel les données historiques de mise en file d'attente (210) et les données historiques de capteur (212) correspondent à la zone surveillée (MA).

5. Système (10) selon la revendication 1, dans lequel la pluralité d'entrées de recommandeur (206) comprend en outre un nombre maximal de files d'attente disponibles (214) dans la zone surveillée (MA) et/ou un temps de service (216) nécessaire pour au moins une personne parmi les personnes (I) dans la prévision de volume de file d'attente (204) dans la zone surveillée (MA).

6. Système (10) selon la revendication 1, dans lequel la prévision de volume de file d'attente (204) correspond à une fenêtre temporelle future prédéterminée (218), et dans lequel la prévision de volume de file d'attente comprend un nombre de personnes (220) qui auront besoin d'un service dans la zone surveillée (MA) dans la fenêtre temporelle future prédéterminée (218).

7. Système (10) selon la revendication 1, comprenant en outre une interface utilisateur (295) configurée pour afficher la recommandation (206) comprenant le nombre de files d'attente nécessaires (208).

8. Système (10) selon la revendication 1, dans lequel les données de capteur optimisées (108) provenant de chacun parmi la pluralité de capteurs (102) indiquent la prévision de volume de file d'attente (204) avec une signification statistique (224) au-dessus d'un seuil prédéterminé (226).

9. Système (10) selon la revendication 8, dans lequel la signification statistique (224) d'au moins une localisation (242) est en fonction au moins en partie de données de contexte de zone surveillée (256), et les données de contexte de zone surveillée (256) comprennent un type de zone surveillée (234), une ou plusieurs sections (236) au sein de la zone surveillée (MA), et des données de localisation de section (238) correspondant à la ou aux sections (236).

10. Procédé (500) destiné à la gestion prévisionnelle de file d'attente d'une zone surveillée, comprenant :
la fourniture (502), en provenance d'une pluralité de capteurs installés dans un système d'éclairage connecté et positionnés au niveau d'une pluralité de localisations, de données de capteur optimisées correspondant à des personnes dans la zone surveillée, dans lequel la pluralité de localisations sont générées à partir d'un modèle de sélection de capteur (222) en fonction de données d'entraînement de sélection et d'une pluralité de localisations potentielles de capteur ; et dans lequel les données d'entraînement de sélection comportent une pluralité de plans d'étage tiers, de données historiques de comptage de gens tierces, ou des données de contexte tierces,
la génération (504), par l'intermédiaire d'un processeur, d'une prévision de volume de file d'attente en fonction des données de capteur optimisées et d'un modèle prospectif ; et
la génération (506), par l'intermédiaire du processeur, d'une recommandation en fonction de la prévision de volume de file d'attente, dans lequel la recommandation comprend un nombre de files d'attente nécessaires pour traiter la prévision de volume de file d'attente ;
dans lequel les données de capteur optimisées provenant de chacun parmi la pluralité de capteurs indiquent la prévision de volume de file d'attente avec une signification statistique au-dessus d'un seuil prédéterminé.

11. Procédé (500) selon la revendication 10, comprenant en outre la génération (508), par l'intermédiaire du processeur, du modèle de prévision en fonction de données historiques de mise en file d'attente et de données historiques de capteur, dans lequel les données historiques de mise en file d'attente et les données historiques de capteur correspondent à la zone surveillée.

12. Procédé (500) selon la revendication 10, comprenant en outre la commande dynamique (510), par l'intermédiaire du processeur, d'un ou plusieurs luminaires du système d'éclairage connecté en fonction de la recommandation.

13. Procédé (500) selon la revendication 10, dans lequel le modèle de sélection de capteur est généré en fonction des données d'entraînement de sélection, et dans lequel les données d'entraînement de sélection comportent une pluralité de plans d'étage tiers, de données historiques de comptage de gens tierces ou de données de contexte tierces.

14. Procédé (500) selon la revendication 10, dans lequel au moins une localisation est en fonction au moins en partie de données de contexte de zone surveillée, et les données de contexte de zone surveillée comprennent un type de zone surveillée, une ou plusieurs sections au sein de la zone surveillée (MA), et des données de localisation de section correspondant à la ou aux sections.
